# EUROPEAN PATENT SPECIFICATION

(11) **EP 1 549 523 B1**
(45) Date of publication and mention of the grant of the patent: **23.02.2011**
(21) Application number: 03799221.1
(22) Date of filing: 08.09.2003
(51) Int. Cl.: B60K 17/28, F16H 63/40

(54) **AN AUTOMATIC ENGAGING/DISENGAGING METHOD OF A COUPLING-DEPENDENT POWER TAKE-OFF**
VERFAHREN ZUM AUTOMATISCHEN EINRÜCKEN/AUSRÜCKEN EINER KUPPLUNGSABHÄNGIGEN ZAPFWELLE
PROCEDE AUTOMATIQUE D'ENCLENCHEMENT ET DE DESENCLENCHEMENT POUR UNE PRISE DE MOUVEMENT DEPENDANT DE L'ACCOUPLEMENT

(30) Priority: 02.10.2002 SE 0202917
(43) Date of publication of application: 06.07.2005
(73) Proprietor: VOLVO LASTVAGNAR AB, 405 08 Göteborg (SE)
(72) Inventor: STEEN, Marcus, S-424 33 Angered (SE); BRATHE, Lars, S-417 13 Göteborg (SE); ERIKSSON, Anders, S-413 20 Göteborg (SE)
(74) Representative: Fröhling, Werner Otto
(86) International application number: PCT/SE2003/001387
(87) International publication number: WO 2004/030973

(56) References cited:
- DE-A1- 10 059 708
- US-A- 5 299 129
- US-A- 5 611 751

## Description

### TECHNICAL FIELD OF THE INVENTION

The present invention relates to a method for motor vehicles according to the preamble of patent claims 1 and 6 below. The method relates to an automatic engaging/disengaging method for a coupling-dependent power take-off arranged on the gearbox of the vehicle.

### STATE OF THE ART

In order for it to be possible to handle the load on a truck effectively, load-handling equipment is necessary. The commonest examples of such equipment are tipping gear and cranes. Also common are hook loaders, refuse-handling units, rotating cement mixers, flushing units and air compressors for loading or unloading bulk loads.

In order to utilize the driving power of the vehicle engine to drive the load-handling equipment as well, a power take-off is required. The driving power from the power take-off can be transmitted either mechanically via a propeller shaft or belts or hydraulically by virtue of a hydraulic pump being mounted on the power take-off.

Power take-offs are divided into coupling-independent and coupling-dependent power take-offs. The coupling-dependent power take-offs are mounted on the gearbox and are usually driven by the intermediate shaft of the gearbox. This means that the power take-off is coupling-dependent, that is to say the power take-off stops when the disk clutch between the engine and gearbox of the vehicle is disengaged. Depending on whether or not the gearbox is equipped with a split gear, the ratio between the engine and the power take-off can be influenced. Coupling-dependent power take-offs are suitable for load-handling equipment which is used when the vehicle is stationary, for example tipping units, cranes, hook loaders, pumps for emptying/filling from various containers and air compressors for loading or unloading bulk loads.

Automatic gearboxes of the automated stage-geared gearbox type have become increasingly common in heavy-duty vehicles as microcomputer technology has developed further and made it possible, with a control computer and a number of actuators, for example servo motors, to precision-regulate engine speed, engagement and disengagement of an automated disk clutch between the engine and the gearbox and also the internal coupling means of the gearbox in such a way and in relation to one another so that gentle shifting is always obtained at the correct engine speed.

DE10059708 discloses an example of an automated stage-geared gearbox according to prior art.

The present invention aims at solving a problem of how to simplify operations for the driver of a vehicle when he desires to use a coupling-dependent power take-off arranged, in an automated stage-geared gearbox.

### SUMMARY OF THE INVENTION

The solution of the problem according to the invention as far as the method according to the invention is concerned is described in patent claims 1 and 6. The other patent claims describe preferred embodiments and developments of the method according to the invention (2 to 5 and 7 and 8).

The method according to the invention describes an automatic engaging method and an automatic disengaging method for a coupling-dependent power take-off which is driven by an engine, arranged in a vehicle, via an automated disk clutch which in turn is coupled to an automatic stage-geared gearbox in which a shaft for driving the power take-off is arranged. At least one control unit for controlling the gearbox, the disk clutch and the engine is arranged in the vehicle.

In the case of the engaging method, the invention is characterized by the steps:
- the control unit registers via a control, coupled to the control unit, for controlling the power take-off that engagement of the power take-off is requested;
- the control unit registers that the speed of the vehicle is zero or virtually zero;
- the control unit controls the rotational speed of the engine to idling speed or virtually idling speed;
- the control unit disengages the disk clutch;
- the control unit engages the power take-off;
- the control unit couples the disk clutch together.

In the case of the disengaging method, the invention is characterized by the steps:
- the control unit registers via a control, coupled to the control unit, for controlling the power take-off that disengagement of the power take-off is requested;
- the control unit controls the rotational speed of the engine to idling speed or virtually idling speed;
- the control unit disengages the disk clutch;
- the control unit disengages the power take-off;
- the control unit couples the disk clutch together.

The advantage of the engaging/disengaging method according to the invention is that it is easier and in most cases quicker for the driver to engage and disengage the power take-off. The power take-off is engaged or disengaged with only one manipulation.

In a first preferred embodiment of the method according to the invention, the control unit is arranged so as, after engagement of the power take-off has been performed, to adapt the rotational speed of the engine taking account of the power take-off and/or taking account of equipment driven by the power take-off.

The advantage of the method according to the invention is that, as the control system knows in advance which type of power take-off and/or which type of equipment is coupled on to the power take-off, the engaging and disengaging method can be optimized, for example as far as rotational speed is concerned.

In a second embodiment of the method according to the invention, the engagement itself of the power take-off is optimized by, just before engagement of the power take-off takes place, the control unit ensuring that the rotational speed of that shaft of the gearbox which drives the power take-off is reduced.

The advantage of the method according to the invention is that the engaging/disengaging device of the power take-off is subjected to smaller stresses and in this way the life of the device is prolonged.

Further embodiments of the invention emerge from the dependent patent claims.

### BRIEF DESCRIPTION OF THE DRAWINGS

The present invention will be described in greater detail below with reference to the accompanying drawings, which, for the purpose of exemplification, show further preferred embodiments of the invention and also the technical background.
Figure 1 shows a diagrammatic representation of an internal combustion engine with adjacent clutch and gearbox.
Figure 2 shows the clutch and the gearbox in Figure 1 on enlarged scale.

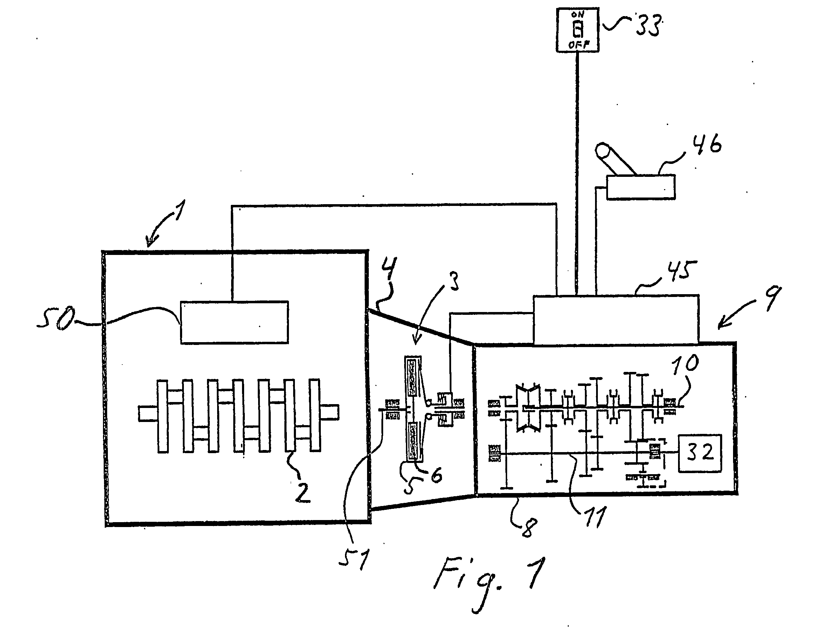

In Figure 1, reference number 1 designates a six-cylinder internal combustion engine, for example a diesel engine, the crankshaft 2 of which is coupled to a single-plate dry disk clutch, designated generally by reference number 3, which is enclosed in a clutch case 4. The crankshaft 2 is, via the output shaft 51 of the engine, which shaft is connected to the flywheel (not shown), connected non-rotatably to the clutch housing 5 of the clutch 3, while its plate 6 is connected non-rotatably to an input shaft 7 which is mounted rotatably in the casing 8 of a gearbox designated generally by reference number 9. A main shaft 10 and an intermediate shaft 11 are also mounted rotatably in the casing 8.

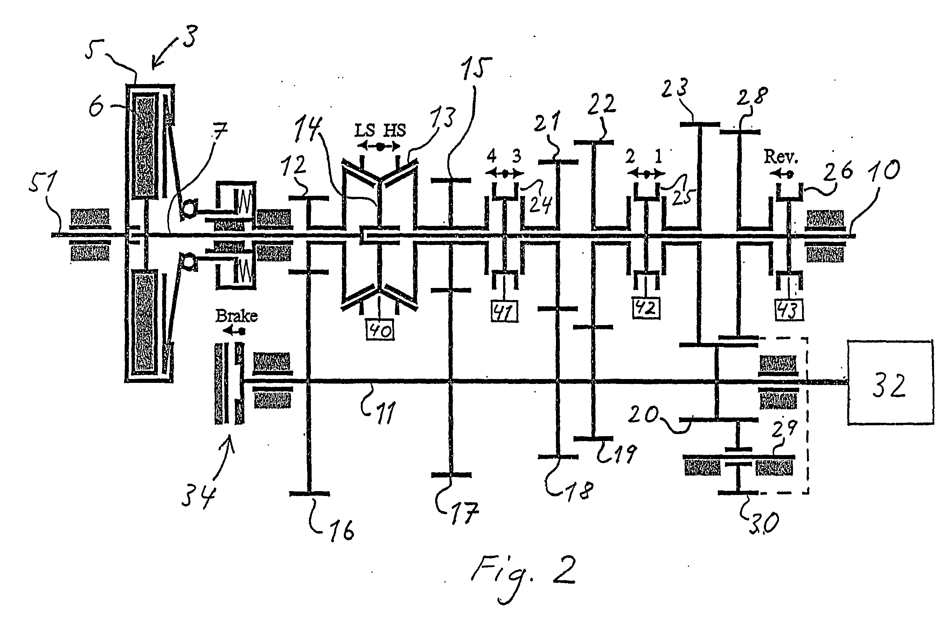

As can be seen most clearly from Figure 2, a gearwheel 12 is mounted rotatably on the input shaft 7 and is lockable on the shaft by means of a coupling sleeve 13 which is provided with synchronizing means and is mounted non-rotatably but axially displaceably on a hub 14 connected non-rotatably to the input shaft 7. By means of the coupling sleeve 13, a gearwheel 15 mounted rotatably on the main shaft 10 is also lockable relative to the input shaft 7. With the coupling sleeve 13 in a central position, both the gearwheels 12 and 15 are disengaged from their shafts 7 and, respectively, 10. The gearwheels 12 and 15 engage with gearwheels 16 and, respectively, 17 which are connected non-rotatably to the intermediate shaft 11. Arranged in a rotationally fixed manner on the intermediate shaft 11 are further gearwheels 18, 19 and 20 which engage with gearwheels 21, 22 and, respectively, 23 which are mounted rotatably on the main shaft 10 and are lockable on the main shaft by means of coupling sleeves 24 and, respectively, 25 which, in the illustrative embodiment shown, do not have synchronizing devices. A further gearwheel 28 is mounted rotatably on the main shaft 10 and engages with an intermediate gearwheel 30 which is mounted rotatably on a separate shaft 29 and in turn engages with the intermediate shaft gearwheel 20. The gearwheel 28 is lockable on its shaft by means of a coupling sleeve 26.

The gearwheel pairs 12, 16 and 15, 17 and the coupling sleeve 13 form a synchronized split gear with a low gear stage LS and a high gear stage HS. The gearwheel pair 15, 17 also forms, together with the gearwheel pairs 21, 18, 22, 19, 23, 20 and the three gearwheels 28, 20 and 30, a basic gearbox with four forward gears and one reverse gear. The output end of the main shaft 10 can be connected directly to a propeller shaft (not shown) which conveys the driving power out to the driving wheels (not shown). An alternative is for the output end of the main shaft 10 to be connected to a range gear stage (not shown) which in turn is connected to the propeller shaft.

The coupling sleeves 13, 24, 25 and 26 are displaceable as shown by the arrows in Figure 2, the gear stages shown in conjunction with the arrows being obtained. The coupling sleeves 13, 24, 25 each have three positions, two gear positions and a neutral position N (central position). The coupling sleeve 26 has one gear position and a neutral position N. The displacement of the coupling sleeves is brought about by respective servo devices 40, 41, 42 and 43 indicated diagrammatically in Figure 2, which can be pneumatically operated piston/cylinder arrangements of the type used in a gearbox of the type described above which is marketed under the name I-shift.

The servo devices 40, 41, 42 and 43 are controlled by an electronic control unit 45 (see Figure 1), comprising a microcomputer, depending on signals fed into the control unit representing various engine and vehicle data comprising at least engine speed, vehicle speed, throttle pedal position and, where appropriate, engine brake on/off, when an electronic gear selector 46 coupled to the control unit 45 is in its automatic shifting position. When the selector is in the position for manual shifting, shifting takes place at the command of the driver via the gear selector 46.

The control unit 45 requests engine speed and/or engine torque from the engine control unit 50 which controls the fuel injection.

In Figures 1 and 2, reference number 32 designates a power take-off coupled to the intermediate shaft 11. The power take-off usually consists of a housing mounted on the side or rear end wall of the gearbox. By means of an engaging and disengaging device (not shown), the input shaft (not shown) of the power take-off 32 can be connected in a rotationally fixed manner to the intermediate shaft 11. The engaging and disengaging device of the power take-off 32 is controlled by the control unit 45.

The driver of the vehicle requests engagement and disengagement of the power take-off 32 by means of a control 33 for controlling the power take-off 32, which control 33 is connected to the control unit 45. When the power take-off 32 is engaged, it is therefore driven by the engine 1 via the disk clutch 3, the split gear 12, 16 or 15, 17 and also the intermediate shaft 11. The power take-off 32 is usually equipped with one or more gearing possibilities on the at least one output shaft (not shown) of the power take-off. A desired unit to be driven is coupled to the output shaft of the power take-off 32.

According to the invention, the control unit 45 is programmed so that, when the control unit 45 receives an input signal from the control 33 indicating that the power take-off 32 is to be engaged, the control unit 45 controls the engine speed to the idling speed of the engine 1. Before the rotational speed of the engine 1 is controlled to the idling speed, the control unit 45 first checks that appropriate given conditions are met, for example that the vehicle is stationary and/or that a parking brake (not shown) arranged in the vehicle is applied.

When the engine 1 is down to its idling speed, the control unit 45 disengages the disk clutch 3 and then waits until the rotational speed of the intermediate shaft 11 has been reduced to a low speed, typically 30 rpm or less in difference between the rotational speed of the intermediate shaft and of the input shaft of the power take-off 32. The reduction in the rotational speed of the intermediate shaft 11 can be accelerated, for example by means of an intermediate shaft brake 34 (shown only in Figure 2) arranged on the intermediate shaft 11. The braking function of the intermediate shaft brake 34 is controlled by the control unit 45.

In the illustrative embodiment shown, the gearbox is equipped with a split gear part 12, 16, 15, 17, 13, 14. The next step in the method according to the invention is therefore that the control unit 45 selects a split gear ratio suitable for the power take-off 32 and/or for the equipment driven by the power take-off. A split gear is normally selected so that the engine speed is as low as possible but the engine can still deliver sufficient torque. Information about this is stored in the control unit 45.

When the correct split gear is engaged, the power take-off 32 is engaged by the control unit 45 via the engaging and disengaging device (not shown) of the power take-off. The control unit 45 adapts the reengagement of the disk clutch 3 in such a way that, if the engaging and disengaging device of the power take-off is of disk clutch type, low rotational speeds are preferably selected. If the engaging and disengaging device of the power take-off is of the claw coupling type, the disk clutch 3 is slipped in in such a way that any gear tooth against gear tooth situation in the claw coupling is eliminated. When the power take-off 32 is engaged, the disk clutch 3 is engaged fully, if appropriate via a torque control procedure.

According to an advantageous embodiment of the invention, the control unit 45 is programmed so as, after engagement of the power take-off 32, to control the rotational speed of the engine 1 taking account of the power take-off 32 and/or taking account of equipment (not shown) driven by the power take-off 32.

According to the invention, disengagement of the power take-off 32 takes place in a corresponding way by the control unit 45 first registering that disengagement via the control 33 is requested. Here also, an alternative embodiment is that the control unit 45 first checks that appropriate given conditions (see the engaging method) are met before the rotational speed of the engine 1 is controlled to the idling speed. After the control unit 45 has reduced the rotational speed of the engine 1 to its idling speed and then reduced the rotational speed of the intermediate shaft 11, the control unit 45 disengages the power take-off 32 by means of the engaging and disengaging device of the power take-off 32. The control unit 45 then couples the disk clutch 3 together in a suitable manner and the control of the engine is finished.

In an embodiment of the invention, the driver of the vehicle can advantageously be provided with feedback about the engaging/disengaging function of the power take-off by means of an indicator lamp and/or information on a display or another information device connected to the vehicle.

The invention can also be applied to gearboxes without a split gear part.

## Claims

1. An automatic engaging method for a coupling-dependent power take-off (32), which power take-off (32) is driven by an engine (1), arranged in a vehicle, via an automated disk clutch (3) which in turn is coupled to an automatic stage-geared gearbox (9) in which a shaft (11) for driving the power take-off (32) is arranged, at least one control unit (45) for controlling the gearbox (9), the disk clutch (3) and the engine (1), the engaging method being **characterized by** the steps:
- the control unit (45) registers via a control (33), coupled to the control unit (45), for controlling the power take-off (32) that engagement of the power take-off (32) is requested;
- the control unit (45) registers that the speed of the vehicle is zero or virtually zero;
- the control unit (45) controls the rotational speed of the engine (1) to idling speed or virtually idling speed;
- the control unit (45) disengages the disk clutch (3);
- the control unit (45) engages the power take-off (32);
- the control unit (45) couples the disk clutch (3) together.

2. The automatic engaging method for a coupling-dependent power take-off (32) as claimed in claim 1, where the method is further **characterized by** the step that, after engagement of the power take-off (32) has been performed, the control unit (45) adapts the rotational speed of the engine (1) taking account of the power take-off (32) and/or taking account of equipment driven by the power take-off (32).

3. The automatic engaging method for a coupling-dependent power take-off (32) according to one of the preceding claims, where the method is further **characterized by** the step that, before engagement of the power take-off (32) takes place, the control unit (45) ensures that the rotational speed of that shaft (11) of the gearbox (9) which drives the power take-off is reduced.

4. The automatic engaging method for a coupling-dependent power take-off (32) according to any one of the preceding claims, where the method is further **characterized by** the step that, when the gearbox (9) is equipped with a split gear (12, 16, 15, 17, 13, 14), the control unit (45) ensures that, after disengagement of the disk clutch (3), a split gear is selected taking account of the power take-off (32) and/or equipment driven by the power take-off.

5. The automatic engaging method for a coupling-dependent power take-off (32) according to any one of the preceding claims, where the method is further **characterized by** the step that the control unit (45) ensures that the engagement itself of the power take-off (32) takes place in an optimum manner by adjusting rotational speed and/or, in particular in the case of a claw coupling arranged between the shaft (11) and the power take-off (32), by prevention of a gear tooth against gear tooth situation in the claw coupling.

6. An automatic disengaging method for a coupling-dependent power take-off (32), which power take-off (32) is driven by an engine (1), arranged in a vehicle, via an automated disk clutch (3) which in turn is coupled to an automatic stage-geared gearbox (9) in which a shaft (11) for driving the power take-off (32) is arranged, at least one control unit (45) for controlling the gearbox (9), the disk clutch (3) and the engine (1), the disengaging method being **characterized by** the steps:
- the control unit (45) registers via a control (33), coupled to the control unit (45), for controlling the power take-off (32) that disengagement of the power take-off (32) is requested;
- the control unit (45) controls the rotational speed of the engine (1) to idling speed or virtually idling speed;
- the control unit (45) disengages the disk clutch (3);
- the control unit (45) disengages the power take-off (32);
- the control unit (45) couples the disk clutch (3) together.

7. The automatic disengaging method for a coupling-dependent power take-off (32) as claimed in claim 6, where the method is further **characterized by** the step that, before disengagement of the power take-off (32) takes place, the control unit (45) ensures that the rotational speed of that shaft (11) of the gearbox (9) which drives the power take-off is reduced.

8. The automatic disengaging method for a coupling-dependent power take-off (32) as claimed in one of claims 6 or 7, where the method is further **characterized by** the step that, after disengagement of the power take-off (32) has taken place, the control unit (45) controls the rotational speed of the engine (1) to idling speed or virtually idling speed.

## Patentansprüche

1. Automatisches Einrückverfahren für einen kupplungsabhängigen Nebenabtrieb (32), wobei der Nebenabtrieb (32) von einem in einem Fahrzeug angeordneten Motor (1) über eine automatische Scheibenkupplung (3) angetrieben wird, die ihrerseits mit einem automatischen Stufengetriebe (9) gekoppelt ist, in dem eine Welle (11) zum Antrieb des Nebenabtriebs (32) angeordnet ist, wobei wenigstens eine Steuereinheit (45) zur Steuerung des Getriebes (9), der Scheibenkupplung (3) und des Motors (1) vorgesehen ist, wobei das Einrückverfahren durch die Schritte **gekennzeichnet** ist:
- die Steuereinheit (45) registriert über eine mit der Steuereinheit (45) zur Steuerung des Nebenabtriebs (32) gekoppelte Steuerung (33), dass ein Einrücken des Nebenabtriebs (32) angefordert wird,
- die Steuereinheit (45) registriert, dass die Geschwindigkeit des Fahrzeugs Null oder nahezu Null ist,
- die Steuereinheit (45) steuert die Drehzahl des Motors (1) auf Leerlaufdrehzahl oder fast auf Leerlaufdrehzahl,
- die Steuereinheit (45) rückt die Scheibenkupplung (3) aus,
- die Steuereinheit (45) rückt den Nebenabtrieb (32) ein,
- die Steuereinheit (45) kuppelt die Scheibenkupplung (3) zusammen.

2. Automatisches Einrückverfahren für einen kupplungsabhängigen Nebenabtrieb (32) nach Anspruch 1, wobei das Verfahren außerdem durch den Schritt **gekennzeichnet** ist, dass, nachdem das Einrücken des Nebenabtriebs (32) durchgeführt wurde, die Steuereinheit (45) die Drehzahl des Motors (1) anpasst, wobei der Nebenabtrieb (32) und/oder ein von dem Nebenabtrieb (32) angetriebenes Gerät berücksichtigt wird.

3. Automatisches Einrückverfahren für einen kupplungsabhängigen Nebenabtrieb (32) nach einem der vorhergehenden Ansprüche, wobei das Verfahren außerdem durch den Schritt **gekennzeichnet** ist, dass, bevor ein Einrücken des Nebenabtriebs (32) stattfindet, die Steuereinheit (45) sicherstellt, dass die Drehzahl der Welle (11) des Getriebes (9) verringert wird, die den Nebenabtrieb antreibt.

4. Automatisches Einrückverfahren für einen kupplungsabhängigen Nebenabtrieb (32) nach einem der vorhergehenden Ansprüche, wobei das Verfahren außerdem durch den Schritt **gekennzeichnet** ist, dass, wenn das Getriebe (9) mit einem Splitgetriebe (12, 16, 15, 17, 13, 14) ausgestattet ist, die Steuereinheit (45) sicherstellt, dass nach dem Ausrücken der Kupplung (3) ein Splitgang gewählt wird, wobei der Nebenabtrieb (32) und/oder ein von dem Nebenabtrieb angetriebenes Gerät berücksichtigt wird.

5. Automatisches Einrückverfahren für einen kupplungsabhängigen Nebenabtrieb (32) nach einem der vorhergehenden Ansprüche, wobei das Verfahren außerdem durch den Schritt **gekennzeichnet** ist, dass die Steuereinheit (45) sicherstellt, dass das Einrücken selbst des Nebenabtriebs (32) auf optimale Weise durch Einstellung der Drehzahl und/oder, insbesondere im Falle einer zwischen der Welle (11) und dem Nebenabtrieb (32) angeordneten Klauenkupplung, durch Verhinderung einer Getriebezahn-gegen-Getriebezahn-Situation in der Klauenkupplung stattfindet.

6. Automatisches Ausrückverfahren für einen kupplungsabhängigen Nebenabtrieb (32), wobei der Nebenabtrieb (32) von einem in einem Fahrzeug angeordneten Motor (1) über eine automatische Scheibenkupplung (3) angetrieben wird, die ihrerseits mit einem automatischen Stufengetriebe (9) gekoppelt ist, in dem eine Welle (11) für einen Antrieb des Nebenabtriebs (32) angeordnet ist, wobei wenigstens eine Steuereinheit (45) zur Steuerung des Getriebes (9), der Scheibenkupplung (3) und des Motors (1) vorgesehen ist, wobei das Ausrückverfahren durch die Schritte **gekennzeichnet** ist:
- die Steuereinheit (45) registriert über eine mit der Steuereinheit (45) gekoppelte Steuerung (33) zur Steuerung des Nebenabtriebs (32), dass ein Ausrücken des Nebenabtriebs (32) angefordert wird,
- die Steuereinheit (45) steuert die Drehzahl des Motors (1) auf Leerlaufdrehzahl oder fast auf Leerlaufdrehzahl,
- die Steuereinheit (45) rückt die Scheibenkupplung (3) aus,
- die Steuereinheit (45) rückt den Nebenabtrieb (32) aus,
- die Steuereinheit (45) kuppelt die Scheibenkupplung (3) zusammen.

7. Automatisches Ausrückverfahren für einen kupplungsabhängigen Nebenabtrieb (32) nach Anspruch 6, wobei das Verfahren außerdem durch den Schritt **gekennzeichnet** ist, dass, bevor das Ausrücken des Nebenabtriebs (32) stattfindet, die Steuereinheit (45) sicherstellt, dass die Drehzahl der Welle (11) des Getriebes (9) verringert wird, die den Nebenabtrieb antreibt.

8. Automatisches Ausrückverfahren für einen kupplungsabhängigen Nebenabtrieb (32) nach einem der Ansprüche 6 oder 7, wobei das Verfahren außerdem durch den Schritt **gekennzeichnet** ist, dass, nachdem das Ausrücken des Nebenabtriebs (32) stattgefunden hat, die Steuereinheit (45) die Drehzahl des Motors (1) auf Leerlaufdrehzahl oder fast auf Leerlaufdrehzahl steuert.

## Revendications

1. Procédé d'embrayage automatique pour une prise de force dépendant d'un accouplement (32), laquelle prise de force (32) est entraînée par un moteur (1), agencé dans un véhicule, via un embrayage à disque automatisé (3) qui à son tour est couplé à une boîte de vitesses séquentielle automatique (9) dans laquelle est agencé un arbre (11) pour entraîner la prise de force (32), au moins une unité de commande (45) pour commander la boîte de vitesses (9), l'embrayage à disque (3) et le moteur (1), le procédé d'embrayage étant **caractérisé par** les étapes suivantes :
- l'unité de commande (45) enregistre via une commande (33), couplée à l'unité de commande (45), permettant de commander la prise de force (32), qu'un enclenchement de la prise de force (32) est nécessaire ;
- l'unité de commande (45) enregistre que la vitesse du véhicule et nulle ou virtuellement nulle ;
- l'unité de commande (45) amène la vitesse de rotation du moteur (1) au ralenti ou virtuellement au ralenti ;
- l'unité de commande (45) libère l'embrayage à disque (3) ;
- l'unité de commande (45) enclenche la prise de force (32) ;
- l'unité de commande (45) vient coupler l'embrayage à disque (3).

2. Procédé d'embrayage automatique pour une prise de force dépendant d'un accouplement (32) selon la revendication 1, dans lequel le procédé est **caractérisé en outre par** l'étape au cours de laquelle une fois que l'enclenchement de la prise de force (32) a été effectué, l'unité de commande (45) adapte la vitesse de rotation du moteur (1) en prenant en compte la prise de force (32) et/ou en prenant en compte l'équipement entraîné par la prise de force (32).

3. Procédé d'embrayage automatique pour une prise de force dépendant d'un accouplement (32) selon l'une des revendications précédentes, dans lequel le procédé est **caractérisé en outre par** l'étape au cours de laquelle, avant que l'enclenchement de la prise de force (32) ait lieu, l'unité de commande (45) garantit que la vitesse de rotation de cet arbre (11) de la boîte de vitesses (9) qui entraîne la prise de force est réduite.

4. Procédé d'embrayage automatique pour une prise de force dépendant d'un accouplement (32) selon l'une quelconque des revendications précédentes, dans lequel le procédé est **caractérisé en outre par** l'étape au cours de laquelle, lorsque la boîte de vitesses (9) est équipée d'un engrenage en deux pièces (12, 16, 15, 17, 13, 14), l'unité de commande (45) garantit que, une fois que l'embrayage à disque (3) est libéré, un engrenage en deux pièces est sélectionné en prenant en compte la prise de force (32) et/ou l'équipement entraîné par la prise de force.

5. Procédé d'embrayage automatique pour une prise de force dépendant d'un accouplement (32) selon l'une quelconque des revendications précédentes, dans lequel le procédé est **caractérisé en outre par** l'étape au cours de laquelle l'unité de commande (45) garantit que l'enclenchement lui-même de la prise de force (32) a lieu de manière optimale en ajustant la vitesse de rotation et/ou, en particulier dans le cas d'un embrayage à griffes agencé entre l'arbre (1) et la prise de force (32), en empêchant une situation dent contre dent dans l'embrayage à griffes.

6. Procédé de désembrayage automatique pour une prise de force dépendant d'un accouplement (32), laquelle prise de force (32) est entraînée par un moteur (1), agencé dans un véhicule, via un embrayage à disque automatisé (3) qui à son tour est couplé à une boîte de vitesses séquentielle automatique (9) dans laquelle est agencé un arbre (11) pour entraîner la prise de force (32), au moins une unité de commande (45) pour commander la boîte de vitesses (9), l'embrayage à disque (3) et le moteur (1), le procédé de désembrayage étant **caractérisé par** les étapes suivantes :
- l'unité de commande (45) enregistre via une commande (33), couplée à l'unité de commande (45), permettant de commander la prise de force (32), que le désenclenchement de la prise de force (32) est nécessaire ;
- l'unité de commande (45) amène la vitesse de rotation du moteur (1) au ralenti ou virtuellement au ralenti ;
- l'unité de commande (45) libère l'embrayage à disque (3) ;
- l'unité de commande (45) désenclenche la prise de force (32) ;
- l'unité de commande (45) vient coupler l'embrayage à disque (3).

7. Procédé de désembrayage automatique pour une prise de force dépendant d'un accouplement (32) selon la revendication 6, dans lequel le procédé est **caractérisé en outre par** l'étape au cours de laquelle, avant que le désenclenchement de la prise de force (32) ait lieu, l'unité de commande (45) garantit que la vitesse de rotation de cet arbre (11) de la boîte de vitesses (9) qui entraîne la prise de force est réduite.

8. Procédé de désembrayage automatique pour une prise de force dépendant d'un accouplement (32) selon l'une des revendications 6 ou 7, dans lequel le procédé est **caractérisé en outre par** l'étape au cours de laquelle, une fois que le désenclenchement de la prise de force (32) a eu lieu, l'unité de commande (45) amène la vitesse de rotation du moteur (1) au ralenti ou virtuellement au ralenti.
